# FASCICULE DE BREVET EUROPEEN

(11) **EP 3 234 462 B1**
(45) Date de publication et mention de la délivrance du brevet: **13.05.2020**
(21) Numéro de dépôt: 15828739.1
(22) Date de dépôt: 17.12.2015
(51) Int. Cl.: F23C 9/00, F23C 99/00, F23D 23/00

(54) **DISPOSITIF DE COMBUSTION COMPRENANT UNE ENCEINTE DE COMBUSTION A PAROIS DITES « FROIDES », CHAUDIÈRE ET FOUR COMPORTANT UN TEL DISPOSITIF**
VORRICHTUNG ZUR VERBRENNUNG MIT EINER SOGENANNTEN COOL-WALL-BRENNKAMMER, KESSEL UND OFEN MIT SOLCH EINER VORRICHTUNG
DEVICE FOR COMBUSTION PROVIDED WITH A SO-CALLED COOL-WALL COMBUSTION CHAMBER, BOILER AND FURNACE COMPRISING SUCH A DEVICE

(30) Priorité: 19.12.2014 FR 1463024
(43) Date de publication de la demande: 25.10.2017
(73) Titulaire: ENGIE, 92400 Courbevoie (FR)
(72) Inventeur: OURLIAC, Mathieu, 77162 Saint Soupplets (FR); BELLIN CROYAT, Thierry, 95160 Montmorency (FR); GOSSELIN, Dominique, 95550 Bessancourt (FR)
(74) Mandataire: Cornuejols, Georges
(86) Numéro de dépôt international: PCT/FR2015/000231
(87) Numéro de publication internationale: WO 2016/097501

(56) Documents cités:
- EP-A1- 1 950 494
- EP-A1- 2 085 698
- WO-A1-2004/106807
- WO-A1-2013/029977

## Description

### DOMAINE TECHNIQUE DE L'INVENTION

La présente invention vise un dispositif de combustion d'un comburant et d'un combustible dans une enceinte de combustion à parois dites « froides », une chaudière et un four comportant un tel dispositif. Elle s'applique, notamment, aux fours de raffinage, aux chaudières industrielles, aux fours à pétrochimie, aux fours de procédés industriels et aux chaudières de récupération.

### ETAT DE LA TECHNIQUE

La plupart des procédés de combustion sont confrontés à des émissions non désirées d'oxydes d'azote (NOx) dans les fumées de combustion. Les NOx ont des effets néfastes sur l'être humain ainsi que sur l'environnement. Ils sont par exemple responsables de pluies acides et contribuent à la formation d'ozone atmosphérique.

La combustion sans flamme, autrement appelée « combustion diluée » est un type de combustion permettant de limiter les pics de température et ainsi diminuer drastiquement les émissions d'oxyde d'azote. Cette combustion est basée sur une intense dilution des jets de comburant et de combustible via des re-circulations internes de produits de combustion. La dilution permet de passer d'une combustion intense localisée à une combustion plus diffusée en volume. La température élevée des produits servant de diluant, les produits de combustion en re-circulation, permet d'assurer la stabilité de ce mode de combustion.

Cette technique est industriellement implantée dans des procédés dits « chauds », à savoir des procédés dont la température moyenne de l'enceinte est très supérieure, d'environ 25°C, à la température d'auto inflammation du combustible considéré.

Dans les enceintes hautes température, c'est-à-dire dont la température minimale des produits de combustion dans le foyer est supérieure à 800°C, la technologie de combustion sans flamme permet de réduire drastiquement, d'un facteur de deux typiquement, les émissions de NOx par rapport aux technologies habituelles employées dans ces procédés.

Ce type de combustion se caractérise par un volume important de la zone de dégagement de chaleur, une température homogène dans le front de flamme, des pics de température et des fluctuations de températures bien plus faibles que pour une combustion classique, des émissions de NOx réduites et un couplage moins fort entre ondes acoustiques et dégagement de chaleur.

Les spécificités de cette technologie sont les très fortes impulsions de combustible et de comburant assurant une forte re-circulation interne des produits de combustion vers le brûleur, des injections séparées de combustible et de comburant, et de fortes distances inter-jet, permettant à la dilution de se faire avant le début de la réaction.

L'oxydation sans flamme s'auto-entretient par auto inflammation d'un mélange ternaire comburant/combustible/gaz brûlés. Pour que l'auto inflammation ait lieu, il est dès lors nécessaire que la température dans la zone de mélange soit supérieure de plus de 300°C à la température d'auto inflammation du combustible considéré. Ainsi ces technologies ne peuvent être employées dans des enceintes de combustion de plus basse température des fumées.

Cependant, dans les procédés dits « à parois froides », par exemple réalisés dans une chaudière, un four de raffinage ou un four de pétrochimie, les produits de combustion se refroidissent au contact des parois, et ne permettent pas d'atteindre la température d'auto inflammation dans la zone de mélange combustible/ comburant/produits de combustion re-circulés.

La plupart des brûleurs industriels pour ce type d'applications sont basés sur une combustion étagée, stabilisée par une racine de flamme très chaude accrochée derrière un disque de stabilisation. Dans cette zone de combustion primaire, la température est élevée et les temps de résidence sont longs, il s'ensuit des émissions d'oxydes d'azote indésirables. Ces technologies permettent de respecter les valeurs limites d'émission (abréviées « VLE » ci-après) actuelles à puissance nominale, mais ne plus être valables dans le cas d'un abaissement de ces VLE dans la réglementation. De plus, les technologies existantes ne permettent pas de respecter les VLE sur toute la plage de variation de puissance pré-requise pour ce type d'application : au moins de 1 à 5, en particulier à bas régime.

La formation d'oxyde d'azote s'effectue via de nombreux chemins chimiques. Pour la combustion du gaz naturel dans les chaudières, les deux principaux contributeurs sont les NOx d'origine thermique (mécanisme de Zeldovich) et les NOx précoces (mécanisme de Fenimore). Le taux de production de NOx thermiques suit une loi exponentielle en fontion de la température de flamme. Outre la dépendance à la température, la formation des NOx thermiques dépend aussi du temps de résidence dans les zones chaudes.

Étant données les contributions relatives des deux types de formation des oxydes d'azote, on se concentre en général dans un premier temps sur la réduction des NOx thermiques, puis on observe l'effet des modifications sur les NOx précoces.

La réduction des NOx peut être faite selon deux principes appelés méthodes primaires et méthodes secondaires. Les méthodes primaires consistent à empêcher la formation des NOx tandis que les méthodes secondaires visent à les détruire. Les méthodes secondaires ont pour inconvénients un prix de mise en œuvre élevé du procédé de réduction, des rejets d'ammoniac importants et une fragilité accrue de l'installation. Elles sont aussi plus difficiles à opérer du fait de la multiplication des équipements et elles ne sont parfois pas implémentables sur des équipements existants par manque de place.

Ainsi, les méthodes primaires semblent préférables pour la combustion de gaz. La plupart des brûleurs de chaudières à basses émissions de NOx sont basés sur un étagement de l'air et/ou du combustible. Avec cette architecture, deux zones de réactions sont créées, une zone primaire riche, apportant l'énergie nécessaire à la stabilisation d'une zone secondaire pauvre, diluée par les re-circulations internes des produits de combustion. Typiquement 10% de la puissance est apporté par la combustion primaire et 90% par la combustion secondaire. En évitant une zone de combustion à la stoechiométrie, c'est à dire la quantité d'air juste nécessaire pour brûler la quantité de gaz injecté, on limite les pics de température et donc la formation de NOx.

Une technologie pour améliorer encore les performances des brûleurs « Low NOx » (traduit par « à basse formation de NOx ») est de favoriser les re-circulations internes. L'air secondaire résiduel et le gaz secondaire sont alors dilués avant le début de la réaction et les pics de température de la flamme secondaire sont encore réduits. C'est la dilution qui agit comme un ballast thermique et permet de diminuer les émissions de NOx.

Avec les techniques d'étagement et de re-circulation interne, on arrive actuellement à un plancher dans la diminution des émissions de NOx. La zone de combustion primaire, indispensable à la stabilisation de la flamme principale, est accrochée dans le sillage d'une pièce mécanique. Ce type de stabilisation a l'inconvénient de créer des zones chaudes à temps de résidence longs, très émettrices de NOx : en particulier à bas régime, lorsque la part de la combustion primaire dans la puissance totale dissipée augmente.

De plus, pour éviter le soufflage de la flamme, on doit limiter les vitesses d'air ce qui réduit l'intensité de la re-circulation interne. Pour conserver celle-ci, on produit un mouvement de rotation de l'air grâce à une pièce mécanique. Cette pièce mécanique peut être fragilisée par la zone de réaction primaire située juste dans son sillage.

Une autre solution pour diminuer les émissions de NOx dans les chaudières est d'utiliser une re-circulation externe des produits de combustion. L'air de combustion est alors pré dilué avec des fumées. Cela permet de diminuer la concentration en oxygène dans l'écoulement du comburant et ainsi de réduire le pic de température et la production de NOx thermiques. Cependant, ce type de système est complexe, onéreux, demande une maintenance fréquente et est parfois non applicable sur des installations existantes : soit par manque de place dans le foyer, soit par manque de place autour de l'équipement.

Pour des enceintes aux environnements plus froids, tels des fours de raffinage ou des chaudières à gaz, les conditions d'auto-inflammation sont plus difficiles à respecter. Un apport d'énergie externe est nécessaire. L'oxydation sans flamme, telle qu'elle est mise en œuvre dans des applications hautes températures, ne peut donc pas être étendue à des chaudières industrielles.

Dans certains systèmes, un réchauffement des produits de combustion re-circulés est réalisé à l'aide d'un élément chauffant auxiliaire. Cet élément permet de réchauffer les produits de combustion de manière à obtenir une température supérieure à la température d'auto-inflammation dans la zone de mélange pour des enceintes dites « froides ». Cet élément est positionné dans l'enceinte de combustion proche d'une des parois. En l'état, cette technologie ne peut fonctionner pour plusieurs raisons. D'une part, la surface d'échange n'est pas suffisante pour permettre un chauffage suffisant des produits re-circulés. D'autre part, un positionnement au milieu de l'enceinte de combustion a pour effet de chauffer des produits de combustion ne participant pas à la dilution.

Cet élément chauffant étant positionné proche d'une paroi et ayant une température de l'ordre de 400°C, typiquement dans une chaudière industrielle, il induit un transfert thermique néfaste et non contrôlé vers cette paroi interne et non vers les produits de combustion re-circulés. De plus, la re-circulation dans une enceinte de combustion étant un processus qui s'effectue en trois dimensions, il est nécessaire que l'élément chauffant puisse chauffer les écoulements venant de toutes les directions. Enfin, il ne faut chauffer que des molécules de fumées participant effectivement à la dilution pour obtenir un rendement de la technologie suffisant. L'objectif est bien de chauffer des fumées qui sont utilisées pour stabiliser la combustion.

On connaît, de plus, des systèmes tels que décrits dans la demande de brevet internationale WO 2004/106807. Dans ces systèmes un brûleur ou un canal amène des fumées chaudes (issues d'une combustion en amont) pour stabiliser (dépasser localement la température d'auto inflammation) la combustion au niveau du brûleur principal.

Cependant, ces systèmes nécessitent l'existence d'un système de combustion auxiliaire et génèrent de très fortes émissions de NOx.

En conclusion, il n'existe à ce jour, pas de solution pour mettre en œuvre une combustion de type fortement diluée, et donc à très basse émissions de NOx, dans une enceinte de combustion aux parois froides, et s'affranchissant d'une zone primaire de combustion à fortes émissions de NOx.

### OBJET DE L'INVENTION

La présente invention vise à remédier à tout ou partie de ces inconvénients.

A cet effet, selon un premier aspect, la présente invention vise un dispositif de combustion de réactifs dans une enceinte de combustion à parois dites froides, c'est à dire présentant une température de paroi supportant une charge thermique inférieure à 125 °C, avec les caractéristiques de la revendication indépendante 1. D'autres caractéristiques avantageuses sont décrites dans les revendications dépendantes.

Grâce à ces dispositions, le dispositif bénéficie des performances de la combustion fortement diluée sans nécessiter de dispositif de stabilisation habituellement mis en œuvre, ce qui permet au dispositif de bénéficier de très basses émissions de NOx et d'émissions stables quelle que soit la plage de variation de puissance.

La mise en œuvre de parois froides est réalisée, par exemple de telle manière que la température d'au moins une zone du foyer soit inférieure à 900°C pour appliquer cette technologie aux fours de craquage dont la température est généralement de 850°C, c'est à dire trop basse pour y insérer un brûleur à combustion classique.

En particulier, la combustion du premier réactif en sortie de la conduite secondaire permet de réchauffer les produits de combustion re-circulés entrés en contact avec les parois froides de la chambre de combustion.

Dans des modes de réalisation, le moyen d'injection est une matrice poreuse, le mélange traversant la matrice poreuse.

Ces modes de réalisation permettent la génération d'une flamme stabilisée en surface de la matrice poreuse.

Dans des modes de réalisation, la matrice poreuse est inclinée, selon un angle compris entre 0° et 30° par rapport à un axe longitudinal de la conduite d'entrée du premier réactif, et obstrue progressivement la conduite secondaire vers l'aval du flux.

Ces modes de réalisation permettent une répartition du mélange en surface de la matrice poreuse.

Dans des modes de réalisation, la matrice poreuse est positionnée de manière à ce que le premier réactif n'entre pas en contact avec la matrice aux pressions mises en oeuvre.

Ces modes de réalisation permettent d'éviter une usure rapide de la matrice poreuse.

Dans des modes de réalisation, le dispositif comporte deux conduites primaires d'entrée du deuxième réactif et deux conduites secondaires d'entrée du mélange, positionnées en alternance autour de la conduite d'entrée du premier réactif.

Ces modes de réalisation permettent un échauffement optimal du deuxième réactif sorti des conduites primaires par la combustion du mélange sorti des conduites secondaires.

Dans des modes de réalisation, le point de rencontre entre chaque flux de mélange issu d'une conduite secondaire et le flux de premier réactif est positionné en amont du point de rencontre entre le premier réactif échauffé et le flux issu de la conduite primaire de deuxième réactif.

Ces modes de réalisation permettent un échauffement du premier et du deuxième réactif par la combustion du mélange en sortie de chaque conduite secondaire permettant d'atteindre la température d'auto-inflammation des réactifs.

Dans des modes de réalisation, le premier réactif et/ou le deuxième réactif d'une conduite est mis en mouvement dans cette conduite par le biais d'un ventilateur ou d'un circuit d'air surcompressé.

Ces modes de réalisation permettent d'injecter les réactifs par impulsion dans l'enceinte de combustion.

Selon un deuxième aspect, la présente invention vise une chaudière, qui comporte un dispositif de combustion objet de la présente invention.

Selon un troisième aspect, la présente invention vise un four, qui comporte un dispositif de combustion objet de la présente invention.

Les buts, avantages et caractéristiques particulières de la chaudière et du four objets de la présente invention étant similaires à ceux du dispositif objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif de combustion objet de la présente invention, en regard des dessins annexés, dans lesquels :
- la figure 1 représente, schématiquement et en coupe, un mode de réalisation particulier du dispositif objet de la présente invention,
- la figure 2 représente, schématiquement, en coupe et vu de dessus, un mode de réalisation particulier du dispositif objet de la présente invention,
- la figure 3 représente, schématiquement, en coupe et vu de profil, un mode de réalisation particulier du dispositif objet de la présente invention et
- la figure 4 représente, schématiquement et en perspective, un mode de réalisation particulier du dispositif objet de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en œuvre indépendamment d'autres paramètres dudit exemple de réalisation.

On note dès à présent que les figures ne sont pas à l'échelle.

Pour le reste de la description, on appelle « premier réactif » un réactif combustible ou comburant et « deuxième réactif » un réactif respectivement comburant ou combustible.

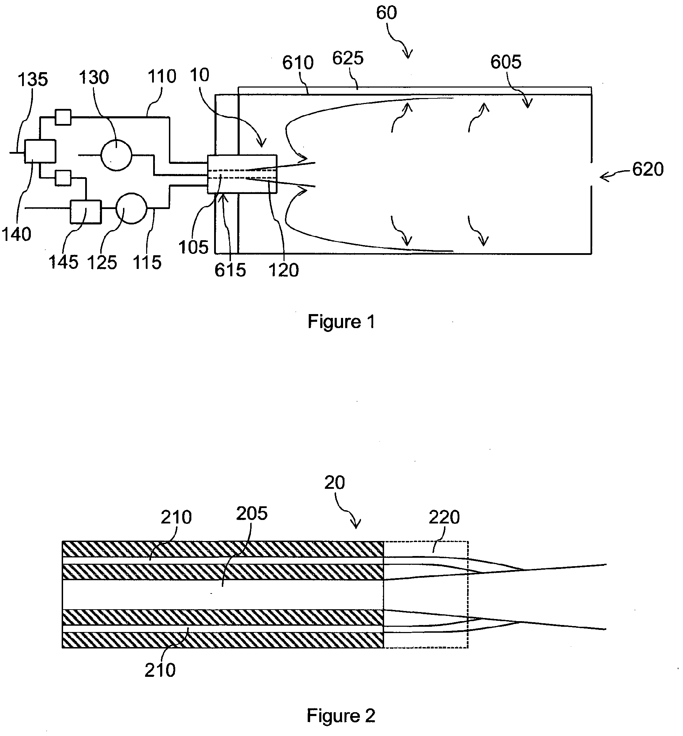

On observe, sur la figure 1, qui n'est pas à l'échelle, une vue en coupe d'un mode de réalisation du dispositif 10 objet de la présente invention. Ce dispositif 10 de combustion de réactifs dans une enceinte 605 de combustion à parois 610 dites froides, c'est à dire présentant une température de paroi supportant une charge thermique inférieure à 125°C, qui comporte :
- au moins une conduite 105 d'entrée d'un premier réactif dans l'enceinte de combustion,
- au moins une conduite 110 primaire d'un deuxième réactif dans l'enceinte de combustion distincte de la conduite d'entrée du premier réactif et
- au moins une conduite 115 secondaire d'entrée d'un mélange de réactifs dans l'enceinte de combustion présentant un moyen d'injection 120 d'un flux de mélange de réactif dirigé vers le flux du premier réactif entré dans l'enceinte,
le mélange issu de la conduite secondaire entraînant une combustion pour échauffer :
- le flux de premier réactif sortant d'au moins une conduite 105 d'entrée du premier réactif,
- le deuxième réactif issu de la conduite 110 primaire et
- les produits de la combustion re-circulés dans l'enceinte 605 pour diluer les réactifs entrés,
à une température supérieure à une température d'auto-inflammation d'au moins un réactif dilué.

L'enceinte de combustion 605 présente une ouverture 615 pour dispositif de combustion 10 et une cheminée 620 pour produits de combustion. Cette enceinte de combustion 605 vise à échauffer une chaudière 60 ou un four 60 comportant le dispositif de combustion.

Le dispositif de combustion 10 est, par exemple, un brûleur comportant deux parties :
- une partie dite «tête de brûleur» comportant les conduites, 105 et 110, d'entrée de réactifs et
- une partie dite « brûleur surfacique » ou « brûleur de stabilisation » formé par le moyen d'injection 120 et d'un moyen (non représenté) d'allumage de flamme.

La conduite d'entrée 105 du premier réactif est, par exemple, alimentée en premier réactif injecté à forte énergie cinétique permettant une projection du premier réactif dans l'enceinte de combustion 605 à distance du moyen d'injection 120. L'injection à forte énergie cinétique permet de générer une re-circulation intense des produits de combustion dans l'enceinte de combustion 605. Les produits de combustion ici considérés sont, par exemple, du dioxyde de carbone, de l'azote et de la vapeur d'eau.

On appelle « taux de re-circulation » le rapport du débit de re-circulation de produits de combustion sur le débit d'alimentation des produits de combustion.

Dans le cas de la combustion de gaz naturel, le taux de re-circulation des produits de combustion doit être d'au moins quatre pour assurer une dilution suffisante à la rencontre des flux du premier réactif et du deuxième réactif. L'homme du métier, en fonction du dimensionnement de l'enceinte de combustion 605 adapte la pression des conduites, 105 et 110, pour atteindre la puissance désirée. Le taux de recirculation est contrôlé en adaptant les diamètres et la distance entre les jets est calculée pour atteindre le taux de dilution désirée, de 3 à 6 par exemple, au point de rencontre entre les jets.

Les produits de combustion circulant dans l'enceinte de combustion 605 perdent une partie importante de leur énergie par convection et par rayonnement au profit d'une charge 625 à chauffer. La charge 625 à chauffer dépend du type de dispositif mettant en œuvre le dispositif de combustion 10. Par exemple, cette charge 625 est contenue dans des tubes, dans le cas de chaudières à tubes d'eau ou de four de raffinage. Dans le cas de chaudières à tubes de fumée, cette charge 625 est contenue dans un volume en forme de cylindre de révolution, l'enceinte de combustion 605 étant plongée dans ce volume. Cette charge 625 correspond, par exemple, à de l'eau, à un fluide ou à une charge pétrochimique

Le flux thermique est dirigé depuis le centre de l'enceinte de combustion 605 où a lieu la combustion vers les parois 610 à proximité de la charge 625 à chauffer.

Cet échange thermique entraîne une baisse de la température des produits de combustion re-circulés conduisant, sans l'apport du brûleur surfacique, à une température trop basse pour, qu'après dilution avec les produits de combustion entrés dans l'enceinte de combustion 605, les réactifs présentent une température supérieure à la température d'auto-inflammation. Ces produits de combustion présentent, par exemple, une température inférieure à 725°C.

L'énergie dissipée par le brûleur surfacique à vocation à compenser cette baisse de température.

Le moyen d'injection 120 est, préférentiellement, une matrice poreuse. Cette matrice poreuse libère en surface le mélange qui entre en combustion de manière à réaliser l'échauffement décrit ci-dessus. La concentration en gaz de ce mélange est comprise, par exemple, entre 5% et 15%, ce qui correspond à la plage d'inflammabilité d'un mélange gaz naturel/air.

Un moyen d'allumage (non représenté) permet au mélange ainsi formé de réaliser une réaction de combustion en surface de la matrice poreuse, via une flamme stabilisée. La puissance ainsi générée est dirigée vers le ou les flux de réactifs de sorte à porter ce ou ces flux au moins à la température d'auto-inflammation caractéristique de ces réactifs dilués. Ces réactifs sont chauffés, par exemple, jusqu'à une température de 1125°C.

Cette matrice poreuse est positionnée de telle manière que, aux conditions de pression mises en œuvre dans la conduite 105, le flux de premier réactif n'entre pas en contact avec la matrice poreuse.

Dans des variantes préférentielles, le dispositif 10 comporte au moins deux matrices poreuses disposées de part et d'autre des flux de réactifs entrés dans l'enceinte de combustion 605 par les conduites, 105 et 110. De cette manière, les réactifs chauffés entre les matrices poreuses sont aspirés par la dépression créée par les flux de réactifs sortis par ces conduites, 105 et 110. Cette aspiration déplace les réactifs chauffés jusqu'au lieu de réalisation de la combustion diluée de ces réactifs.

Ces brûleurs surfaciques présentent, par exemple, deux modes de fonctionnement. Dans un premier mode de fonctionnement, dit « radiatif », la puissance surfacique du brûleur est inférieure à 1 MW/m². Dans un deuxième mode de fonctionnement, la puissance surfacique du brûleur est supérieure à 1 MW/m². Dans des variantes préférentielles, la puissance surfacique mise en œuvre est comprise entre 1 MW/m² et 2 MW/m².

Les brûleurs surfaciques, tels que ceux décrits ci-dessus, permettent une grande modularité en puissance et ces dispositifs émettent peu de polluants, notamment de monoxyde de carbone et de NOx. Néanmoins, la flamme mise en œuvre dans ces brûleurs est sensible au soufflage lorsqu'un écoulement de gaz impacte la matrice poreuse.

Pour limiter ce risque de soufflage, chaque matrice poreuse est positionnée selon un angle compris entre 0° et 30° par rapport à un axe longitudinal de la conduite d'entrée du premier réactif. Cette disposition permet qu'aucun flux de réactif n'entre en contact avec les matrices. Cet angle est sélectionné en fonction d'un angle d'éjection des flux de réactifs.

Dans des variantes, la matrice poreuse est inclinée et obstrue progressivement la conduite 115 secondaire vers l'aval du flux.

L'ensemble formé par chaque brûleur surfacique du dispositif 10 génère, par exemple, 10% à 20% de la puissance totale générée par le dispositif 10.

La mise en œuvre d'un brûleur surfacique permet, de plus, d'échauffer une partie de l'enceinte de combustion 605 habituellement froide, ce qui permet d'homogénéiser le profil de flux thermique et ainsi de limiter les risques de cokage, notamment dans le cas de l'application du dispositif 10 à un four de craquage de charge pétrochimique. Cette mise en œuvre permet également de limiter les contraintes thermiques sur les matériaux dans un foyer de chaudière à tubes de fumée ou à tubes d'eau, par exemple.

Chaque conduite 105 d'entrée du premier réactif est, par exemple, une canalisation présentant une forme de cylindre de révolution intégrée à une tête de brûleur. Cette conduite 105 d'entrée du premier réactif transporte, par exemple, de l'air.

Dans le mode de réalisation représenté en figure 1, le dispositif 10 comporte une seule conduite 105 d'entrée du premier réactif.

Chaque conduite primaire 110 d'entrée du deuxième réactif est, par exemple, une canalisation présentant une forme de cylindre de révolution intégrée à la tête de brûleur.

Dans le mode de réalisation représenté en figure 1, le dispositif 10 comporte deux conduites primaires 110 d'entrée du deuxième réactif positionnées de part et d'autre de la conduite 105 d'entrée du premier réactif.

Dans le mode de réalisation représenté en figure 1, les conduites, 105 et 110, sont parallèles.

Les flux de réactifs sont par exemple éjectés à une vitesse de cinq mètres par seconde.

Le point de rencontre entre chaque flux issu d'une conduite 115 secondaire de mélange et le flux de premier réactif est positionné en amont du point de rencontre entre le premier réactif échauffé et le flux issu de la conduite 110 primaire de deuxième réactif.

La conduite 105 d'entrée du premier réactif présente une demi-distance interjet avec au moins une conduite 110 d'entrée primaire du deuxième réactif choisie pour que les flux de premier réactif et de deuxième réactif se mélangent à une distance voulue des conduites 105 et 110. L'écartement entre les ouvertures des conduites 105 et 110 est également choisi pour que la dilution des réactifs par les produits de combustion re-circulés soit élevée. Cette dilution permet une faible émission de NOx lors de la combustion. Le taux de dilution est la fraction volumique des inertes. Si ce taux est faible là où la combustion commence, c'est à dire là où les jets se rencontrent, les températures sont élevées donc l'émission de NOx également. Si ce taux est élevé, les températures de flamme seront plus faibles, par effet de ballast thermique, et l'émission de NOx moindre. Si ce taux est trop élevé, la combustion sera trop lente et deviendra incomplète puis instable.

Dans des variantes où une demi-distance interjet désirée ne peut être mise en œuvre en raison de contraintes de dimensionnement de l'enceinte de combustion 605, les flux de deuxième réactif sont injectés avec un angle dirigé vers l'extérieur de cette enceinte 605. Ces variantes permettent de limiter la formation de NOx.

La tête de brûleur est insérée dans l'enceinte de combustion 605 par l'ouverture 615 d'une porte isolée thermiquement. Cet enfoncement est réalisé de manière à ce qu'une ouverture (non représentée) des conduites, 105, 110 et 115, soit positionnée dans l'enceinte de combustion 605.

La combustion réalisée au point de mélange entre les réactifs échauffés et les produits de combustion re-circulés génère, par exemple, entre 80% et 90% de la puissance totale générée par le dispositif 10.

Les conduites, 110 et 115, d'alimentation du deuxième réactif sont alimentées, par exemple, par une source unique 135. Un séparateur 140 répartit le deuxième réactif entre les conduites, 110 et 115. Par exemple, ce séparateur 140 alimente entre 10% et 20% du deuxième réactif à la conduite 115.

Dans des variantes, le deuxième réactif de la conduite 115 est mélangé au premier réactif pour former le mélange.

Dans ces variantes, le premier réactif est, par exemple, de l'air entré dans la conduite 115 par le biais d'un ventilateur 125 et d'un mélangeur 145. Ce mélangeur 145 est, par exemple, un mélangeur à effet Venturi qui assure la production d'un mélange combustible/comburant au taux d'aération souhaité par l'opérateur.

Le flux ainsi entré est effectué à un taux d'aération, c'est à dire au rapport entre un volume d'air utilisé dans la combustion par rapport à un volume d'air théorique pour la réalisation d'une combustion à conditions stœchiométriques, compris entre 1,1 et 1,3 par exemple, pour limiter la formation d'oxydes d'azote. Dans des variantes, ce taux d'aération n'est que de 0,9, ce qui correspond à un manque d'air, le combustible non oxydé finissant sa combustion avec le jet d'air du brûleur principal.

Dans les variantes où le premier réactif est de l'air, cet air est soufflé dans l'enceinte de combustion 605 par un ventilateur 130 poussant l'air dans la conduite 105 d'entrée du premier réactif. Le débit d'air est régulé en fonction d'une demande en puissance pour assurer un taux d'aération prédéterminé.

Dans des variantes, le débit du deuxième réactif dans la conduite d'entrée 110 est régulé en fonction de la puissance désirée par une vanne de régulation. Cette vanne de régulation est asservie au ventilateur 130. Le taux d'aération global, de chaque brûleur surfacique et du brûleur formé par les conduites, 105 et 110, est compris entre 1,02 et 1,2, par exemple.

Dans des variantes, au moins un ventilateur est remplacé par un compresseur.

Dans des variantes, au moins un ventilateur est remplacé par une alimentation réalisée par un circuit d'air surcompressé ou de gaz comprimé.

L'enceinte de combustion 605 comporte, de plus, une cheminée 620 pour évacuation de produits de combustion.

On observe, sur la figure 2, schématiquement et en coupe, une vue de dessus d'une section du dispositif 20 objet de la présente invention. Ce dispositif 20 correspond au dispositif 10 tel que décrit en regard de la figure 1.

On observe, en particulier, deux conduites primaire 210 correspondant aux conduites primaires 110, décrites en regard de la figure 1, entourant une conduite d'entrée 205 correspondant à la conduite d'entrée 105, décrite en regard de la figure 1. Ces conduites primaires 210 transportent un flux du deuxième réactif pour être combiné avec le flux du premier réactif issu de la conduite d'entrée 205 et avec les produits de combustion re-circulés pour réaliser une combustion diluée.

Dans le mode de réalisation représenté en figure 2, le dispositif 20 comporte deux conduites primaires 210. Les conduites, 205 et 210, sont ici alignées selon un axe. Dans des variantes, ce dispositif 20 comporte entre deux et six conduites primaires 210.

Les flux de deuxième réactif sont rabattus vers le flux de premier réactif sortit de la conduite 205 sous l'action des produits de combustion re-circulés dans l'enceinte de combustion.

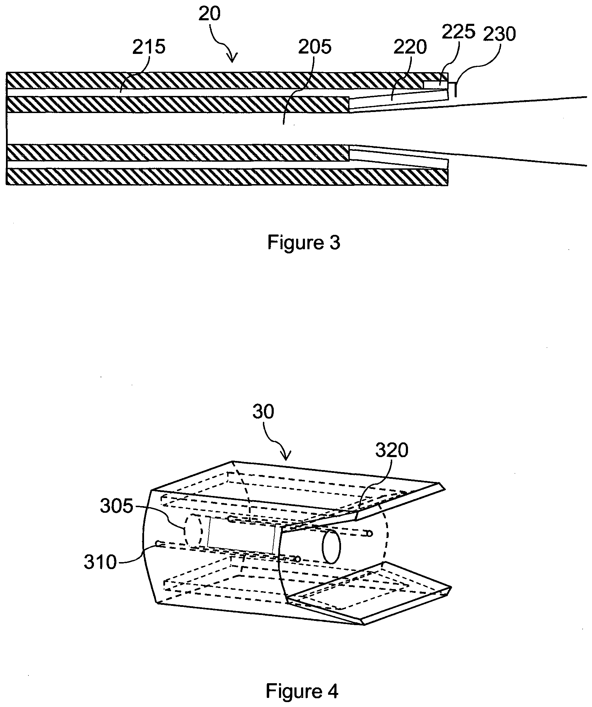

On observe, sur la figure 3, schématiquement et en coupe, une vue de côté du dispositif 20 objet de la présente invention. On observe, notamment, que la conduite d'entrée 205 du premier réactif entourée par deux conduites 215 secondaires correspondant aux conduites secondaires 115 telles que décrites en regard de la figure 1.

Les conduites secondaires 215 transportent préférentiellement un mélange des réactifs ou seulement le deuxième réactif selon les variantes envisagées. Ce mélange de réactifs est transporté jusqu'à une matrice poreuse 220 pour chaque conduite secondaire 215. Cette matrice poreuse est, par exemple, une matrice métallique ou en céramique. La combustion réalisée en surface de cette matrice poreuse permet, comme indiqué précédemment, d'échauffer les flux de réactifs sortant des conduites, 205 et 210.

Comme on le comprend, le dispositif 20 comporte deux conduites 210 primaires d'entrée du deuxième réactif et deux conduites 215 secondaires d'entrée du mélange, positionnées en alternance autour de la conduite 205 d'entrée du premier réactif.

Ce dispositif 20 comporte, de plus, un moyen d'allumage 225 et une sonde d'ionisation 230. Le moyen d'allumage 225 est, par exemple, une électrode d'allumage. La sonde d'ionisation 230 est configurée pour détecter la présence d'une flamme en surface de la matrice poreuse et pour assurer l'allumage de cette matrice le cas échéant.

Les dimensions et positions relatives des conduites et des éléments du dispositif 20 sont choisies pour que :
- les réactifs se déplaçant en regard de chaque matrice poreuse 220 se déplacent à une vitesse inférieure à 10 mètres par seconde,
- la longueur de flamme soit inférieure à 0,8 fois la longueur de l'enceinte de combustion,
- le rapport d'impulsion des flux de combustible et de comburant est inférieur à 0,06, préférentiellement compris entre 0,01 et 0,1, le comburant étant injecté avec une force cinétique élevée au regard de l'injection du combustible pour générer les recirculations dans l'enceinte de combustion, l'injection de gaz doit être suffisamment forte pour que les jets de combustible ne soient pas tout de suite rabattus sur le jet d'air, mais pas trop forte pour que l'écoulement de gaz reste à une température inférieure à la vitesse du son et
- les réactifs présentent, au lieu de rencontre des flux de réactifs, un taux de dilution supérieur à cinq ainsi qu'une température supérieure à 725°C en ce point.

Un taux de dilution supérieur à cinq, pour une combustion méthane/air, correspond à une concentration de moins de 10% en oxygène dans le flux d'air.

Dans ces conditions, peu de NOx est émis lors de la combustion.

Afin d'atteindre ces objectifs, les paramètres suivants peuvent varier :
- le nombre de conduites de combustible,
- le diamètre de ces conduites,
- l'orientation des ouvertures de ces conduites dans l'enceinte de combustion,
- le diamètre de l'ouverture des conduites d'arrivée de comburant,
- la demi-distance interjet entre chaque conduite d'entrée de comburant et les conduites d'entrée de combustible.

Par exemple, dans le cas d'une chaudière à tube de fumées de 750 kW un brûleur, dit « principal » de 500 kW à un taux d'aération de 1,1 est installé dans une enceinte de combustion de 2,5 mètres de longueur pour 0,5 mètre de diamètre. Le brûleur principal présente deux orifices d'entrée de flux de méthane parallèles.

Le procédé d'allumage de ce dispositif est :
- le brûleur surfacique est allumé, seul, grâce à une électrode d'allumage,
- la montée en température de l'enceinte de combustion est contrôlée pour détecter une éventuelle anomalie de fonctionnement,
- un mélange de combustible/comburant proche de la stoechiométrie est injecté dans l'enceinte de combustion par la conduite d'entrée du premier réactif,
- lorsque la température de l'enceinte de combustion dépasse une valeur prédéterminée, le combustible est injecté dans l'enceinte de combustion par les conduites primaires d'entrée du brûleur et la conduite d'entrée du premier réactif ne réalise plus que l'injection de comburant.

Tout au long du fonctionnement du dispositif, le brûleur surfacique reste allumé et délivre une puissance thermique de 10% à 20% de la puissance totale du dispositif.

En cas de défaut du brûleur surfacique, l'alimentation en combustible est mise à l'arrêt. Ce défaut est détecté, par exemple, par une sonde d'ionisation telle que décrite en regard de la figure 3.

La modulation d'un tel brûleur est réalisée par la modulation de la pression de comburant et de combustible.

On observe, sur la figure 4, un mode de réalisation particulier du dispositif 30 objet de la présente invention. Ce dispositif 30 correspond au dispositif 10 tel que décrit en regard de la figure 1.

On observe, notamment, que les moyens d'injection 320, formés ici par des matrices poreuses, présentent des dimensions telles que plus de la moitié de la circonférence d'une tête de brûleur, comportant les conduites, 305 et 310, soit occupée par les matrices poreuses.

Les matrices poreuses sont plates et orientées parallèlement à un bord du flux de réactifs. Cette orientation particulière permet une fabrication facilitée des matrices poreuses et un préchauffage limité du combustible issu des conduites primaires 310.

## Revendications

1. Dispositif (10, 20, 30) de combustion de réactifs comprenant une enceinte (605) de combustion à parois (610) dites froides, c'est à dire présentant une température de paroi supportant une charge thermique inférieure à 125°C, **caractérisé en ce qu'**il comporte :
- au moins une conduite (105, 205, 305) d'entrée d'un premier réactif, parmi un combustible et un comburant, dans l'enceinte de combustion,
- au moins une conduite (110, 210, 310) d'entrée primaire d'un deuxième réactif, parmi un combustible et un comburant et différent du premier réactif, dans l'enceinte de combustion distincte de la conduite d'entrée du premier réactif, l'écartement entre une ouverture d'au moins une des conduites (105) d'entrée du premier réactif et une ouverture d'au moins une des conduites (110) d'entrée primaire du deuxième réactif étant configuré pour que le premier réactif et le deuxième réactif puissent se mélanger, après dilution respective dans un flux de produits de combustion recirculés, à une distance prédéterminée desdits ouvertures et
- au moins une conduite (115, 215) secondaire d'entrée d'un mélange de réactifs dans l'enceinte de combustion présentant un moyen d'injection (120, 220, 320) d'un flux de mélange desdits réactifs dirigé vers le flux du premier réactif entré dans l'enceinte,
le mélange issu de la conduite secondaire pouvant entrainer une combustion pour échauffer :
- le flux de premier réactif sortant d'au moins une conduite d'entrée du premier réactif,
- le deuxième réactif issu de la conduite d'entrée primaire et
- les produits de la combustion recirculés dans l'enceinte pour diluer les réactifs entrés,
à une température supérieure à une température d'auto-inflammation d'au moins un des réactifs dilués.

2. Dispositif (10, 20, 30) selon la revendication 1, dans lequel le rapport d'impulsion des flux de combustible et de comburant est compris entre 0,01 et 0,1.

3. Dispositif (10, 20, 30) selon la revendication 2, dans lequel le rapport d'impulsion est inférieur à 0,06.

4. Dispositif (10, 20, 30) selon l'une des revendication 1 à 3, qui comporte une tête de brûleur comportant une ouverture d'au moins une des conduites (110) d'entrée primaire du deuxième réactif et une ouverture d'au moins une des conduites (105) d'entrée du premier réactif, les dites ouvertures étant distantes l'une de l'autre.

5. Dispositif (10, 20, 30) selon l'une des revendication 1 à 4, dans lequel le moyen d'injection (120, 220, 320) est une matrice poreuse, le mélange traversant la matrice poreuse.

6. Dispositif (10, 20, 30) selon la revendication 5, dans lequel la matrice poreuse est inclinée, selon un angle compris entre 0° et 30° par rapport à un axe longitudinal de la conduite d'entrée du premier réactif, et obstrue progressivement la conduite (115, 215) secondaire vers l'aval du flux.

7. Dispositif (10, 20, 30) selon l'une des revendications 1 ou 6, dans lequel la matrice poreuse est positionnée de manière à ce que le premier réactif n'entre pas en contact avec la matrice aux pressions mises en œuvre.

8. Dispositif (10, 20, 30) selon l'une des revendications 1 à 7, qui comporte deux conduites (110, 210, 310) primaires d'entrée du deuxième réactif et deux conduites (115, 215) secondaires d'entrée du mélange, positionnées en alternance autour de la conduite (105, 205, 305) d'entrée du premier réactif.

9. Dispositif (10, 20, 30) selon l'une des revendications 1 à 8, dans lequel le point de rencontre entre chaque flux du mélange issu d'une conduite (115, 215) secondaire et le flux de premier réactif est positionné en amont du point de rencontre entre le premier réactif échauffé et le flux issu de la conduite (110, 210, 310) primaire de deuxième réactif.

10. Dispositif (10, 20, 30) selon l'une des revendications 1 à 9, dans lequel le premier réactif et/ou le deuxième réactif d'une conduite (105, 110, 115, 205, 210, 215, 305, 310) est mis en mouvement dans cette conduite par le biais d'un ventilateur (125, 130) ou d'un circuit d'air surcompressé.

11. Chaudière (60), **caractérisée en ce qu'**elle comporte un dispositif (10) de combustion selon l'une des revendications 1 à 10.

12. Four (60), **caractérisé en ce qu'**il comporte un dispositif (10) de combustion selon l'une des revendications 1 à 10.

## Patentansprüche

1. Vorrichtung (10, 20, 30) zur Verbrennung von Reaktionsmitteln, umfassend eine Brennkammer (605) mit Cool-Wall-Wänden (610), das heißt, aufweisend eine Wandtemperatur, die eine thermische Belastung unter 125 °C verträgt, **dadurch gekennzeichnet, dass** sie aufweist:
- mindestens eine Einlassleitung (105, 205, 305) eines ersten Reaktionsmittels von einem Brennstoff und von einem Verbrennungsmittel in die Brennkammer,
- mindestens eine Primäreinlassleitung (110, 210, 310) eines zweiten Reaktionsmittels von einem Brennstoff und von einem Verbrennungsmittel und unterschiedlich von dem ersten Reaktionsmittel in die Brennkammer, die von der Einlassleitung des ersten Reaktionsmittels separat ist, wobei der Abstand zwischen einer Öffnung mindestens einer der Einlassleitungen (105) des ersten Reaktionsmittels und einer Öffnung mindestens einer der Primäreinlassleitungen (110) des zweiten Reaktionsmittels konfiguriert ist, damit sich das erste Reaktionsmittel und das zweite Reaktionsmittels nach jeweiliger Verdünnung in einem Strom rezirkulierter Verbrennungsprodukte in einem vorher festgelegten Abstand von den Öffnungen vermischen können, und
- mindestens eine Sekundäreinlassleitung (115, 215) eines Reaktionsmittelgemischs in die Brennkammer, die eine Einspritzeinrichtung (120, 220, 320) eines Gemischstroms der Reaktionsmittel aufweist, der zu dem Strom des ersten Reaktionsmittels gerichtet ist, das in die Kammer gelangt,
wobei das Gemisch aus der Sekundärleitung eine Verbrennung bewirken kann, um zu erwärmen:
- den aus mindestens einer Einlassleitung des ersten Reaktionsmittels austretenden Strom des ersten Reaktionsmittels,
- das zweite Reaktionsmittel aus der Primäreinlassleitung und
- die in der Kammer rezirkulierten Verbrennungsprodukte, um die eingeleiteten Reaktionsmittel zu verdünnen,
auf eine Temperatur über einer Selbstentzündungstemperatur von mindestens einem der verdünnten Reaktionsmittel.

2. Vorrichtung (10, 20, 30) nach Anspruch 1, wobei das Impulsverhältnis der Brennstoff- und Verbrennungsmittelströme zwischen 0,01 und 0,1 liegt.

3. Vorrichtung (10, 20, 30) nach Anspruch 2, wobei das Impulsverhältnis unter 0,06 ist.

4. Vorrichtung (10, 20, 30) nach einem der Ansprüche 1 bis 3, die einen Brennerkopf aufweist, aufweisend eine Öffnung mindestens einer der Primäreinlassleitungen (110) des zweiten Reaktionsmittels und eine Öffnung mindestens einer der Einlassleitungen (105) des ersten Reaktionsmittels, wobei die Öffnungen voneinander beabstandet sind.

5. Vorrichtung (10, 20, 30) nach einem der Ansprüche 1 bis 4, wobei die Einspritzeinrichtung (120, 220, 320) eine poröse Matrix ist, wobei das Gemisch die poröse Matrix durchquert.

6. Vorrichtung (10, 20, 30) nach Anspruch 5, wobei die poröse Matrix gemäß einem Winkel zwischen 0° und 30° in Bezug auf eine Längsachse der Einlassleitung des ersten Reaktionsmittels geneigt ist und die Sekundärleitung (115, 215) schrittweise stromabwärts verschließt.

7. Vorrichtung (10, 20, 30) nach einem der Ansprüche 1 oder 6, wobei die poröse Matrix derart positioniert ist, dass das erste Reaktionsmittel mit der Matrix zu den umgesetzten Drücken nicht in Kontakt tritt.

8. Vorrichtung (10, 20, 30) nach einem der Ansprüche 1 bis 7, die zwei Primäreinlassleitungen (110, 210, 310) des zweiten Reaktionsmittels und zwei Sekundäreinlassleitungen (115, 215) des Gemischs aufweist, die alternierend um die Einlassleitung (105, 205, 305) des ersten Reaktionsmittels positioniert sind.

9. Vorrichtung (10, 20, 30) nach einem der Ansprüche 1 bis 8, wobei der Treffpunkt zwischen jedem Strom des Gemischs aus einer Sekundärleitung (115, 215) und der Strom des ersten Reaktionsmittels stromaufwärts zu dem Treffpunkt zwischen dem erwärmten ersten Reaktionsmittel und dem Strom aus der Primärleitung (110, 210, 310) des zweiten Reaktionsmittels positioniert ist.

10. Vorrichtung (10, 20, 30) nach einem der Ansprüche 1 bis 9, wobei das erste Reaktionsmittel und/oder das zweite Reaktionsmittel einer Leitung (105, 110, 115, 205, 210, 215, 305, 310) in dieser Leitung von einem Lüfter (125, 130) oder einem Überdruckluftkreis in Bewegung versetzt wird.

11. Kessel (60), **dadurch gekennzeichnet, dass** er eine Verbrennungsvorrichtung (10) nach einem der Ansprüche 1 bis 10 aufweist.

12. Ofen (60), **dadurch gekennzeichnet, dass** er eine Verbrennungsvorrichtung (10) nach einem der Ansprüche 1 bis 10 aufweist.

## Claims

1. Device (10, 20, 30) for the combustion of reagents comprising a combustion chamber (605) with so-called cold walls (610), i.e. with a wall temperature withstanding a heat load below 125°C, **characterized in that** it comprises:
- at least one inlet duct (105, 205, 305) for a first reagent, either a combustible or an oxidizer, into the combustion chamber;
- at least one primary inlet duct (110, 210, 310) for a second reagent, either a combustible or an oxidizer and different from the first reagent, into the combustion chamber separate from the inlet duct of the first reagent, the spacing between one opening of at least one of the inlet ducts (105) of the first reagent and an opening of at least one of the primary inlet ducts (110) of the second reagent being configured such that the first reagent and the second reagent can be mixed, after respective dilution in a flow of recirculated combustion products, at a predefined distance from said openings; and
- at least one secondary inlet duct (115, 215) of a mixture of reagents in the combustion chamber having a means (120, 220, 320) for injecting a mixture flow of said reagents directed towards the flow of the first reagent entering the chamber,
the mixture from the secondary duct being able to lead to combustion for heating:
- the flow of the first reagent exiting from at least one input duct of the first reagent;
- the second reagent coming from the primary inlet duct; and
- the recirculated combustion products in the chamber for diluting the input reagents,
at a temperature higher than a self-ignition temperature of at least one of the diluted reagents.

2. Device (10, 20, 30) according to claim 1, wherein the impulse ratio of the combustible and oxidizer flows is between 0.01 and 0.1.

3. Device (10, 20, 30) according to claim 2, wherein the impulse ratio is less than 0.06.

4. Device (10, 20, 30) according to one of claims 1 to 3, which comprises a burner head comprising an opening of at least one of the primary inlet ducts (110) of the second reagent and an opening of at least one of the inlet ducts (105) of the first reagent, said openings being separated from each other.

5. Device (10, 20, 30) according to one of claims 1 to 4, wherein the injection means (120, 220, 320) is a porous matrix, the mixture passing through the porous matrix.

6. Device (10, 20, 30) according to claim 5, wherein the porous matrix is inclined, at an angle between 0° and 30° relative to a longitudinal axis of the inlet duct of the first reagent, and progressively obstructs the secondary duct (115, 215) heading downstream of the flow.

7. Device (10, 20, 30) according to one of claims 1 or 6, wherein the porous matrix is positioned such that the first reagent does not enter into contact with the matrix at the pressures utilized.

8. Device (10, 20, 30) according to one of claims 1 to 7, which comprises two primary inlet ducts (110, 210, 310) of the second reagent and two secondary inlet ducts (115, 215) of the mixture, positioned alternately around the inlet duct (105, 205, 305) of the first reagent.

9. Device (10, 20, 30) according to one of claims 1 to 8, wherein the point where each flow of the mixture from a secondary duct (115, 215) meets the flow of the first reagent is positioned upstream from the point where the heated first reagent meets the flow from the primary duct (110, 210, 310) of the second reagent.

10. Device (10, 20, 30) according to one of claims 1 to 9, wherein the first reagent and/or the second reagent of a duct (105, 110, 115, 205, 210, 215, 305, 310) is put into motion in this duct by means of a fan (125, 130) or an over-pressurized air circuit.

11. Boiler (60), **characterized in that** it comprises a combustion device (10) according to one of claims 1 to 10.

12. Furnace (60), **characterized in that** it comprises a combustion device (10) according to one of claims 1 to 10.
